# EUROPÄISCHE PATENTSCHRIFT

(11) **EP 2 260 915 B1**
(45) Veröffentlichungstag und Bekanntmachung des Hinweises auf die Patenterteilung: **04.09.2013**
(21) Anmeldenummer: 10164330.2
(22) Anmeldetag: 28.05.2010
(51) Int. Cl.: B01D 1/00, B01B 1/06

(54) **Vorrichtung zum Verdampfen von Flüssigkeiten**
Liquid evaporation apparatus
Dispositif destiné à l'évaporation de liquides

(30) Priorität: 08.06.2009 DE 102009026808
(43) Veröffentlichungstag der Anmeldung: 15.12.2010
(73) Patentinhaber: ADROP Feuchtemeßtechnik GmbH, 90762 Fürth (DE)
(72) Erfinder: Still, Hans-Martin, 90480 Nürnberg (DE); Venzke, Holger, 90408, Nürnberg (DE)
(74) Vertreter: Gassner, Wolfgang

(56) Entgegenhaltungen:
- EP-A2- 0 808 916
- WO-A1-2008/138756
- DE-A1-102004 041 815
- US-A1- 2005 147 749

## Beschreibung

Die Erfindung betrifft eine Vorrichtung zum Verdampfen von Flüssigkeiten nach dem Oberbegriff des Anspruchs 1.

Eine solche Vorrichtung ist aus der EP 0 808 916 A2 bekannt.

Die DE 10 2005 044 660 A1 offenbart eine Vorrichtung, bei der einem Verteilungsraum stromabwärts ein Porenkörper nachgeordnet ist, in dem die zu verdampfende Flüssigkeit verdampft wird. Bei einem Lastwechsel dauert es relativ lange, bis sich wieder ein Gleichgewichtszustand einstellt. Zwischenzeitlich können unerwünschte Fluktuationen in der Menge des erzeugten Dampfs auftreten. Abgesehen davon kommt es hier zu einer unerwünschten Nachverdampfung von in einem freien Volumen des Verdampfergehäuses verbliebenen Flüssigkeitsresten.

Die US 2005/0147749 A1 offenbart eine Vorrichtung zum Verdampfen flüssiger chemischer Precursoren. Die Precursoren werden in Form eines Aerosols einer beheizten Verdampfungskammer zugeführt.

Eine weitere Vorrichtung ist aus der DE 197 23 680 A1 bekannt. Dabei strömt eine von einem Kaltraum kommende Flüssigkeit durch Röhrchen in einen vom Kaltraum abgetrennten Heißraum. Im Heißraum wird die Flüssigkeit innerhalb der Röhrchen verdampft und gelangt sodann in einen Dampfraum. Die bekannte Vorrichtung weist lediglich einen engen Arbeitsbereich auf. D. h. es kann damit eine pro Zeiteinheit erzeugte Dampfmenge nur in einem engen Bereich variiert werden. Abgesehen davon kann es in den Röhrchen zu lokalen Überhitzungen kommen, so dass Wasser und Dampf in den Dampfraum ausgestoßen werden. Dadurch hervorgerufene Druckfluktuationen bzw. Pulsationen sind bei vielen Anwendungen unerwünscht.

Ein weiterer Verdampfer ist aus der DE 10 2005 023 956 A1 bekannt. Dabei wird die Flüssigkeit wiederum von einem Kaltraum in einen sich stromabwärts anschließenden verdampfungsraum geführt. Der Verdampfungsraum besteht aus einem Ringspalt mit engem Strömungsquerschnitt. Auch dieser Verdampfer weist keine besonders hohe Dynamik auf. Zur Vermeidung unerwünschter Druckfluktuationen bei der Dampferzeugung muss ein Massefluss der zugeführten zu verdampfenden Flüssigkeit in einem relativ engen Bereich gehalten werden.

Die DE 100 39 592 A1 offenbart einen Stapelreaktor, bei dem eine verzweigte Verteilereinheit vorgesehen ist. Am Ende jedes Asts der Verteilereinheit ist ein Porenkörper vorgesehen, welcher in einen Verdampfungsraum hineinragt. Eine Temperatur der Flüssigkeit liegt im Porenkörper unterhalb des Siedepunkts, d. h. die Flüssigkeit wird im Porenkörper nicht verdampft.

Die EP 0 878 442 A1 offenbart einen Reformierungsreaktor, bei dem Zuführkanälen ein aus einem Porenkörper gebildeter Verdampfer nachgeordnet ist. Der Verdampfer kann mit einer elektrischen Heizung versehen sein. Stromabwärts des Verdampfers ist ein ebenfalls aus einem Porenkörper hergestellter Katalysator vorgesehen, in welchem die Reformierungsreaktion stattfindet. Die dabei gebildeten Produkte werden durch stromabwärts des Katalysators vorgesehene Auslasskanäle abgeführt.

Aufgabe der Erfindung ist es, die Nachteile nach dem Stand der Technik zu beseitigen. Es soll insbesondere eine möglichst einfach und kostengünstig aufgebaute Vorrichtung angegeben werden, mit der mit einer hohen Dynamik und unter Vermeidung von Druckfluktuationen Dampf herstellbar ist.

Diese Aufgabe wird durch die Merkmale des Anspruchs 1 gelöst. Zweckmäßige Ausgestaltungen der Erfindung ergeben sich aus den Merkmalen der Ansprüche 2 bis 15.

Nach Maßgabe der Erfindung ist eine Kühleinrichtung zum Kühlen eines einlassseitigen Abschnitts des Verdampfers vorgesehen, welche den einlassseitigen Abschnitt und den darin aufgenommenen einlassseitigen Porenkörperabschnitt umgreift. Damit wird erreicht, dass die Flüssigkeit in einem einlassseitigen Abschnitt des Verdampfers im darin vorgesehenen einlassseitigen Porenkörperabschnitt über eine große Oberfläche verteilt wird. Die Flüssigkeit wird dann im stromabwärts sich anschließenden auslassseitigen Porenkörperabschnitt kontinuierlich erwärmt und schließlich verdampft. Die vorgeschlagene Vorrichtung kann mit einer hohen Dynamik betrieben werden, ohne dass unerwünschte Druckfluktuationen bei der Dampferzeugung auftreten. Insbesondere wird eine unerwünschte Verdampfung der Flüssigkeit vor einem Eintritt in den Porenkörper vermieden.

Bei der vorliegenden Erfindung ist das Verdampfergehäuse im Wesentlichen vollständig mit dem Porenkörper gefüllt. Der Porenkörper erstreckt sich durchgehend vom Einlass bis zum Auslass. Weder im einlassseitigen noch im auslassseitigen Abschnitt des Verdampfergehäuses ist ein freies Volumen zur Aufnahme von Flüssigkeit bzw. Dampf vorgesehen.

Nach einer vorteilhaften Ausgestaltung der Erfindung ist die Kühleinrichtung dazu geeignet, den einlassseitigen Abschnitt auf eine Temperatur unterhalb der Siedetemperatur der zu verdampfenden Flüssigkeit zu kühlen. Damit wird sicher und zuverlässig eine unerwünschte Verdampfung im einlassseitigen Abschnitt des Verdampfers vermieden. Andererseits wird dort die zu verdampfende Flüssigkeit im weiteren Strömungsverlauf aber soweit vorgewärmt, dass stromabwärts eine vollständige Verdampfung im auslassseitigen Abschnitt des Porenkörpers gewährleistet ist.

Die Kühleinrichtung kann den einlassseitigen Abschnitt im direkten thermischen Kontakt umgreifen. Damit wird eine besonders gleichmäßige Kühlung im Bereich des im einlassseitigen Abschnitt befindlichen Porenkörperabschnitts erreicht. Es wird sichergestellt, dass in diesem Abschnitt die zu verdampfende Flüssigkeit im Porenkörper über eine große Oberfläche verteilt und nachfolgend gleichmäßig verdampft wird.

Nach einer weiteren vorteilhaften Ausgestaltung weist die Kühleinrichtung einen mit dem einlassseitigen Abschnitt verbundenen Kühlkörper auf. Der Kühlkörper kann durch freie oder erzwungene Konvektion gekühlt werden. Zu diesem Zweck umfasst der Kühlkörper zweckmäßigerweise Kühlrippen. Ferner kann ein Ventilator zum Umspülen des Kühlkörpers, insbesondere der Kühlrippen, mit Luft vorgesehen sein. Der Kühlkörper ist zweckmäßigerweise aus Aluminium oder Messing hergestellt. Die vorgeschlagene Kühleinrichtung kann relativ einfach aufgebaut werden. Sie kann ohne Verwendung einer Kühlflüssigkeit relativ einfach elektrisch betrieben werden.

Der Porenkörper kann aus einem Pulver, Vlies, Drahtgestrick oder Gewirk gebildet sein. Zweckmäßigerweise ist das Pulver, Drahtgestrick, Vlies oder Gewirk aus einem nichtkorrodierenden Material, vorzugsweise Edelstahl oder Keramik, hergestellt. Die Keramik kann aus Al₂O₃, AlN, SiC oder dgl. gebildet sein. Nach einer besonders vorteilhaften Ausgestaltung ist vorgesehen, dass das Pulver, Vlies, Drahtgestrick oder Gewirk zumindest einlass- oder auslassseitig verpresst oder gesintert ist. Damit wird vermieden, dass sich Pulverpartikel, Partikel des Vlieses, Drahtgestricks oder Gewirks aus dem Porenkörper lösen und unerwünschterweise mit dem hergestellten Dampf weggeführt werden.

Der Porenkörper kann eine offene Porosität im Bereich von 10 bis 60% seines Volumens aufweisen. Die offene Porosität kann auch im Bereich von 30 bis 80%, vorzugsweise im Bereich von 30 bis 50%, des Volumens des Porenkörpers liegen. Ein mittlerer Porendurchmesser liegt vorzugsweise in einem Bereich von 10 bis 300 µm, vorzugsweise im Bereich von 15 bis 80 µm. Ferner kann der Porenkörper zumindest zwei Porenkörperabschnitte mit voneinander verschiedener Porosität aufweisen. Dabei kann die Porosität um zumindest 5% unterschiedlich sein. Es können auch mehr als zwei Porenkörperabschnitte unterschiedlicher Porosität vorgesehen sein. Insbesondere kann es sein, dass sich ein einlass- und ein auslassseitiger Porenkörperabschnitt in der Porosität von einem dazwischenliegenden Porenkörperabschnitt unterscheidet. Die Porosität in den einlass- und/oder auslassseitigen Porenkörperabschnitten kann kleiner als die Porosität im dazwischenliegenden Abschnitt sein. Der vorgeschlagene Porenkörper ermöglicht eine hohe Dynamik bei der Herstellung von Dampf. Unerwünschte Druckfluktuationen können gleichzeitig vermieden werden.

Insbesondere in konstruktionstechnischer Hinsicht hat es sich als vorteilhaft erwiesen, dass der Porenkörper rotationssymmetrisch, vorzugsweise zylindrisch, ausgebildet ist. Dabei ist der Porenkörper so im Verdampfergehäuse untergebracht, dass die zu verdampfende Flüssigkeit im Wesentlichen parallel zur Rotationsachse des Porenkörpers bewegt wird. Wegen der vorgeschlagenen rotationssymmetrischen Ausbildung des Porenkörpers kann dieser gleichförmig erwärmt werden. Lokale Überhitzungen im Porenkörper und dadurch bewirkte Druckfluktuationen werden vermieden.

Nach einer weiteren Ausgestaltung der Erfindung ist am Verdampfer ein erster Temperaturfühler vorgesehen, welcher mit einer Regeleinrichtung zur Regelung einer Heizleistung der Heizung verbunden ist. Als besonders vorteilhaft hat es sich erwiesen, zumindest zwei in Stromrichtung aufeinanderfolgend angeordnete zweite Temperaturfühler vorzusehen, welche ebenfalls mit der Regeleinrichtung verbunden sein können. Damit kann eine besonders exakte Regelung der Heizleistung erfolgen.

Die Heizung umfasst zumindest ein den Porenkörper umgebendes Heizelement. Es kann sich dabei um eine Heizwendel handeln. Ferner kann die Heizung eine den Porenkörper zentral durchgreifende Heizpatrone umfassen.

Die Heizung kann auch zumindest ein selbstregelndes Heizelement umfassen. Damit kann die Vorrichtung besonders einfach und kostengünstig hergestellt werden.

Nach einer weiteren Ausgestaltung der Erfindung kann die Heizung auch einen Wärmespeicher und/oder -verteiler umfassen. Der Wärmespeicher und/oder -verteiler umgreift dabei zweckmäßigerweise einen sich stromabwärts eines einlassseitigen Abschnitts anschließenden auslassseitigen Abschnitt des Verdampfers. Vorteilhafterweise ist der Kühlkörper und/oder der Wärmespeicher und/oder -verteiler aus Aluminium oder Messing hergestellt.

Nachfolgend werden Ausführungsbeispiele der Erfindung anhand der Zeichnungen näher erläutert. Es zeigen:
- Fig. 1: eine schematische Schnittansicht durch einen ersten Verdampfer und
- Fig. 2: eine schematische Schnittansicht durch einen zwei- ten Verdampfer.

Bei den in den Figuren gezeigten Verdampfern ist in einem Verdampfergehäuse 1 ein allgemein mit dem Bezugszeichen 2 bezeichneter Porenkörper aufgenommen. Der Porenkörper 2 weist in der Nähe eines Einlasses 3 einen ersten Porenkörperabschnitt 4 und in der Nähe eines Auslasses 5 des Verdampfergehäuses 1 einen zweiten Porenkörperabschnitt 6 auf. Im ersten 4 und im zweiten Porenkörperabschnitt 6 liegen die den Porenkörper 2 bildenden Bestandteile, beispielsweise ein Metallpulver, ein Metalldrahtgeflecht, ein Metallvlies oder dgl., in untereinander verbundener Form vor. Eine solche Verbindung der Bestandteile des Porenkörpers 2 kann beispielsweise durch Sintern oder Pressen hergestellt werden. Der erste 4 und der zweite Porenkörperabschnitt 6 können in einer tablettenartigen Form vorliegen, welche in das Verdampfergehäuse 1 eingesetzt wird. Zwischen dem ersten 4 und dem zweiten Porenkörperabschnitt 6 befindet sich im formschlüssigen Kontakt ein dritter Porenkörperabschnitt 7. Im dritten Porenkörperabschnitt 7 können die diesen Abschnitt bildenden Bestandteile in ungebundener Form vorliegen, d. h. es kann sich um eine Pulverschüttung oder ein loses Metallgeflecht oder -vlies handeln. Es kann aber auch sein, dass der dritte Porenkörperabschnitt 7 ähnlich wie der erste 4 oder der zweite Porenkörperabschnitt 6 aus einem verpressten oder gesinterten metallischen Material hergestellt ist. Ein Widerstandsheizelement bzw. eine Heizwendel 8 umgibt das Verdampfergehäuse 1 im direkten thermischen Kontakt. Die Heizwendel 8 ist mit einer Stromversorgung 9 und einer nachgeordneten Regeleinrichtung 10 verbunden, welche einen Heizstrom regelt. Zu diesem Zweck ist die Regeleinrichtung 10 mit einem Thermoelement 11 und zwei weiteren Thermoelementen 12 verbunden, welche in der Nähe des Einlasses 3 in Stromrichtung aufeinanderfolgend im Porenkörper 2 vorgesehen sind.

Mit dem Bezugszeichen 13 ist eine Kühleinrichtung bezeichnet, welche einen einlassseitigen Abschnitt A1 des Verdampfergehäuses 1 sowie des darin aufgenommenen Porenkörpers 2 umgreift. Die Kühleinrichtung 13 weist zweckmäßigerweise einen Kühlkörper auf, welcher formschlüssig den einlassseitigen Abschnitt A1 umgreift. Die Kühleinrichtung 13 kann auch auf andere Weise, beispielsweise lediglich mit einer einlassseitigen Stirnseite des Verdampfergehäuses 1, wärmeleitend an das Verdampfergehäuse 1 angebracht sein. Der Kühlkörper kann mit Kühlrippen versehen sein, welche zur Kühlung mit einem Ventilator 14 mit Luft umspült werden.

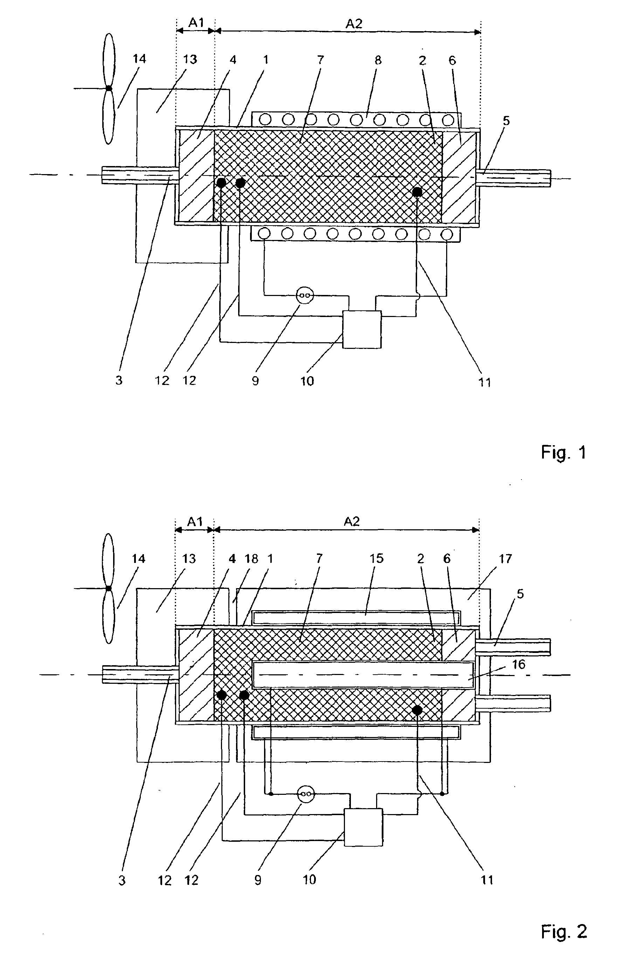

Bei dem in Fig. 2 gezeigten zweiten Verdampfer ist die Heizung aus zumindest einem, vorzugsweise mehreren, das Verdampfergehäuse 1 umgebenden ersten PTC-Element 15 sowie einer im auslassseitigen Abschnitt A2 vorgesehenen Heizpatrone gebildet. Die Heizpatrone wiederum kann aus einem Widerstandsheizelement oder einem zweiten PTC-Element 16 gebildet sein. Das erste 15 sowie das zweite PTC-Element 16 sind selbstregelnd. Infolgedessen ist es hier nicht erforderlich, den Heizstrom mittels einer Regeleinrichtung zu regeln.

Mit dem Bezugszeichen 17 ist ein Wärmespeicher und/oder -verteiler bezeichnet, welcher das Verdampfergehäuse 1 umgreift. Bei dem Wärmespeicher und/oder -verteiler 17 kann es sich beispielsweise um einen aus massivem Aluminium oder Messing hergestellten Metallblock handeln. Der Wärmespeicher und/oder
- verteiler 17 erstreckt sich im Wesentlichen über den auslassseitigen Abschnitt A2. Zwischen der Kühleinrichtung 13 und dem Wärmespeicher und/oder -verteiler 17 ist zur thermischen Isolation allerdings ein Spalt 18 vorgesehen. Bei dem Spalt 18 kann es sich um eine Luftspalt handeln. Im Spalt 18 kann aber auch ein thermisches Isolationsmittel oder dgl. vorgesehen sein. Die Heizung, insbesondere eines oder mehrere selbstregelnde Heizelemente, können auch an einer Außenseite des Wärmespeichers und/oder -verteiler 17 angebracht sein.

Der Auslass 5 ist beim zweiten Verdampfer in Form eines Ringspalts ausgebildet.

Die Funktion der in den Figuren gezeigten Vorrichtungen ist Folgende:
Mittels einer (hier nicht gezeigten) Dosiereinrichtung, z. B. einer Pumpe, wird die zu verdampfende Flüssigkeit, beispielsweise Wasser oder dgl., dem Verdampfergehäuse 1 durch den Einlass 3 zugeführt. Die zugeführte Flüssigkeit wird im ersten Porenkörperabschnitt 4, insbesondere u. a. durch die Wirkung von Kapillarkräften, im Wesentlichen über den gesamten Durchmesser des Porenkörpers 2 verteilt. Wegen der Wirkung der Kühleinrichtung 13 bleibt die zugeführte Flüssigkeit im einlassseitigen Abschnitt A1 des Porenkörpers 2 flüssig. Stromabwärts des einlassseitigen Abschnitts A1 gelangt die Flüssigkeit dann in den auslassseitigen Abschnitt A2 des Porenkörpers 2. Dieser wird mit der Heizung auf einer Temperatur gehalten, welche eine Verdampfung der Flüssigkeit bewirkt. Der damit hergestellte Dampf entweicht über den Auslass 5 aus dem Verdampfergehäuse 1.

Wie aus den Figuren ersichtlich ist, erstreckt sich der einlassseitige Abschnitt A1 über eine kürzere Distanz entlang der Stromrichtung als der auslassseitige Abschnitt A2. Der einlassseitige Abschnitt A1 erstreckt sich zumindest über das 0,05- bis 0,4-Fache, vorzugsweise über das 0,05 bis 0,3-Fache, besonders bevorzugt über das 0,05- bis 0,25-Fache, der Länge des Verdampfergehäuses 1. Dabei ist das Verdampfergehäuse 1 im Wesentlichen vollständig, d. h. zu mehr als 90%, vorzugsweise mehr als 95%, seines Volumens mit dem Porenkörper 2 ausgefüllt. Der Porenkörper 2 kann dabei selbst einen freien Porenraum von 10 bis 60% seines Volumens aufweisen.

Im Rahmen der vorliegenden Erfindung können insbesondere die die Heizung, die Regeleinrichtung 10 sowie den Wärmespeicher und/oder -verteiler 17 betreffenden Merkmale beliebig variiert werden. D. h. es kann beispielsweise beim ersten Verdampfer ein Wärmespeicher und/oder -verteiler 17 hinzugefügt oder anstelle der Heizwendel 8 eines oder mehrere selbstregelnde Heizelemente vorgesehen sein.

Der Porenkörper 2 füllt das Verdampfergehäuse 1 im Wesentlichen aus und erstreckt sich vom Einlass 3 zum Auslass 5. Indem der Porenkörper 2 in einem einlassseitigen Porenkörperabschnitt gekühlt wird, wird eine gleichmäßige Verteilung der Flüssigkeit über den gesamten Durchmesser des Verdampfergehäuses 1 erreicht. Wegen der am auslassseitigen Abschnitt des Verdampfergehäuses 1 vorgesehenen Heizung (8, 15, 16) wird die Flüssigkeit nachfolgend kontinuierlich erwärmt und verdampft. Druckpulsationen werden vermieden. Die vorgeschlagene Vorrichtung weist eine hohe Dynamik auf.

### Bezugszeichenliste

- 1: Verdampfergehäuse
- 2: Porenkörper
- 3: Einlass
- 4: erster Porenkörperabschnitt
- 5: Auslass
- 6: zweiter Porenkörperabschnitt
- 7: dritter Porenkörperabschnitt
- 8: Heizwendel
- 9: Stromversorgung
- 10: Regeleinrichtung
- 11: Thermoelement
- 12: weitere Thermoelemente
- 13: Kühleinrichtung
- 14: Ventilator
- 15: erstes PTC-Element
- 16: zweites PTC-Element
- 17: Wärmespeicher und/oder -verteiler
- 18: Spalt

- A1: einlassseitiger Abschnitt
- A2: auslassseitiger Abschnitt

## Patentansprüche

1. Vorrichtung zum Verdampfen von Flüssigkeiten, mit einem mit einer Heizung (8, 15, 16) beheizbaren Verdampfer, bei dem in einem Verdampfergehäuse (1) mit einem Einlass (3) und einem Auslass (5) ein einen einlassseitigen Porenkörperabschnitt (4) aufweisender Porenkörper (2) aufgenommen ist,
**dadurch gekennzeichnet, dass**
eine Kühleinrichtung (13) zum Kühlen eines einlassseitigen Abschnitts (A1) des Verdampfers (1) vorgesehen ist, welche den einlassseitigen Abschnitt (A1) und den darin aufgenommenen einlassseitigen Porenkörperabschnitt (4) umgreift.

2. Vorrichtung nach Anspruch 1, wobei die Kühleinrichtung (13) dazu geeignet ist, den einlassseitigen Abschnitt (A1) auf eine Temperatur unterhalb der Siedetemperatur der zu verdampfenden Flüssigkeit zu kühlen.

3. Vorrichtung nach einem der vorhergehenden Ansprüche, wobei die Kühleinrichtung (13) den einlassseitigen Abschnitt (A1) im direkten thermischen Kontakt umgreift.

4. Vorrichtung nach einem der vorhergehenden Ansprüche, wobei die Kühleinrichtung (13) einen mit dem einlassseitigen Abschnitt (A1) verbundenen Kühlkörper aufweist.

5. Vorrichtung nach einem der vorhergehenden Ansprüche, wobei der Kühlkörper Kühlrippen aufweist und/oder die Kühleinrichtung (13) einen Ventilator (14) zum Umspülen des Kühlkörpers mit Luft umfasst.

6. Vorrichtung nach einem der vorhergehenden Ansprüche, wobei der Porenkörper (2) eine offene Porosität von 10 bis 60% seines Volumen aufweist.

7. Vorrichtung nach einem der vorhergehenden Ansprüche, wobei der Porenkörper zumindest zwei Porenkörperabschnitte (4, 6, 7) mit voneinander verschiedener Porosität aufweist.

8. Vorrichtung nach einem der vorhergehenden Ansprüche, wobei der Porenkörper (2) rotationssymmetrisch, vorzugsweise zylindrisch, ausgebildet ist.

9. Vorrichtung nach einem der vorhergehenden Ansprüche, wobei am Verdampfer ein erster Temperaturfühler (11) vorgesehen ist, welcher mit einer Regeleinrichtung (10) zur Regelung einer Heizleistung der Heizung (8, 15, 16) verbunden ist.

10. Vorrichtung nach einem der vorhergehenden Ansprüche, wobei zumindest zwei in Stromrichtung aufeinanderfolgend angeordnete zweite Temperaturfühler (12) vorgesehen sind, welche mit der Regeleinrichtung verbunden sind.

11. Vorrichtung nach einem der vorhergehenden Ansprüche, wobei die Heizung (8, 15, 16) zumindest ein den Porenkörper (2) umgebendes Heizelement (8) umfasst.

12. Vorrichtung nach einem der vorhergehenden Ansprüche, wobei die Heizung (8, 15, 16) eine zentral in den Porenkörper (2) eingreifende Heizpatrone (16) umfasst.

13. Vorrichtung nach einem der vorhergehenden Ansprüche, wobei die Heizung (8, 15, 16) zumindest ein selbstregelendes Heizelement, vorzugsweise ein PTC-Element (15, 16), umfasst.

14. Vorrichtung nach einem der vorhergehenden Ansprüche, wobei die Heizung (8, 15, 16) einen Wärmespeicher und/oder - verteiler (17) umfasst.

15. Vorrichtung nach einem der vorhergehenden Ansprüche, wobei der Wärmespeicher und/oder -verteiler (17) einen sich stromabwärts des einlassseitigen Abschnitts (A1) anschließenden auslassseitigen Abschnitt (A2) des Verdampfergehäuses (1) umgreift.

## Claims

1. A device for evaporating liquids, comprising an evaporator that can be heated with a heater (8, 15, 16), wherein in an evaporator housing (1) with an inlet (3) and an outlet (5), a porous body (2) is accommodated that has a porous body section (4) on the inlet side,
**characterized in that**
a cooling unit (13) for cooling an inlet-side section (A1) of the evaporator (1) is provided, which cooling unit surrounds the inlet-side section (A1) and the inlet-side porous body section (4) accommodated therein.

2. The device according to claim 1, wherein the cooling unit (13) is suited for cooling the inlet-side section (A1) to a temperature below the boiling point of the liquid to be evaporated.

3. The device according to any one of the preceding claims, wherein the cooling unit (13) surrounds the inlet-side section (A1) in direct thermal contact.

4. The device according to any one of the preceding claims, wherein the cooling unit (13) has a cooling body that is connected to the inlet-side section (A1).

5. The device according to any one of the preceding claims, wherein the cooling body has cooling ribs, and/or the cooling unit (13) has a ventilator (14) for circulating air around the cooling body.

6. The device according to any one of the preceding claims, wherein the porous body (2) has an open porosity of 10 to 60% of its volume.

7. The device according to any one of the preceding claims, wherein the porous body has at least two porous body sections (4, 6, 7) with porosities that differ from one another.

8. The device according to any one of the preceding claims, wherein the porous body (2) is formed rotationally symmetrical, preferably cylindrical.

9. The device according to any one of the preceding claims, wherein a first temperature sensor (11) is provided on the evaporator, which temperature sensor is connected to a control unit (10) for controlling a heating output of the heater (8, 15, 16).

10. The device according to any one of the preceding claims, wherein at least two temperature sensors (12) are provided which are arranged successively in the flow direction and are connected to the control unit.

11. The device according to any one of the preceding claims, wherein the heater (8, 15, 16) comprises at least one heating element (8) that surrounds the porous body (2).

12. The device according to any one of the preceding claims, wherein the heater (8, 15, 16) comprises a heating cartridge (16) that engages centrally in the porous body (2).

13. The device according to any one of the preceding claims, wherein the heater (8, 15, 16) comprises at least one self-controlling heating element, preferably a PTC element (15, 16).

14. The device according to any one of the preceding claims, wherein the heater (8, 15, 16) comprises a heat accumulator and/or heat distributor (17).

15. The device according to any one of the preceding claims, wherein the heat accumulator and/or heat distributor (17) surrounds an outlet-side section (A2) of the evaporator housing (1), which outlet-side section follows downstream of the inlet-side section (A1).

## Revendications

1. Dispositif d'évaporation de liquides avec un évaporateur susceptible d'être chauffé avec un chauffage (8, 15, 16), dans lequel un corps poreux (2) présentant un segment de corps poreux (4) côté admission logé dans un carter d'évaporateur (1) avec une admission (3) et une sortie (5),
**caractérisé en ce que**
un dispositif de refroidissement (13) est prévu pour le refroidissement d'un segment côté admission (A1) de l'évaporateur (1) qui enveloppe le segment côté admission (A1) et le segment de corps poreux (4) côté admission qui y est logé.

2. Dispositif selon la revendication 1, où le dispositif de refroidissement (13) est conçu pour refroidir le segment côté admission (A1) à une température inférieure à la température d'ébullition du liquide qui doit s'évaporer.

3. Dispositif selon l'une des revendications précédentes, où le dispositif de refroidissement (13) enveloppe le segment côté admission (A1) en contact thermique direct.

4. Dispositif selon l'une des revendications précédentes, où le dispositif de refroidissement (13) présente un refroidisseur relié au segment côté admission (A1).

5. Dispositif selon l'une des revendications précédentes, où le refroidisseur présente des ailettes de refroidissement et/ou le dispositif de refroidissement (13) comporte un ventilateur (14) pour faire circuler de l'air autour du refroidisseur.

6. Dispositif selon l'une des revendications précédentes, où le corps poreux (2) présente une porosité ouverte de 10 à 60% de son volume.

7. Dispositif selon l'une des revendications précédentes, où le corps poreux présente au moins deux segments de corps poreux (4, 6, 7) de porosité différente.

8. Dispositif selon l'une des revendications précédentes, où le corps poreux (2) est réalisé à symétrie de révolution, de préférence cylindrique.

9. Dispositif selon l'une des revendications précédentes, où un premier capteur de température (11) est prévu sur l'évaporateur; ce capteur de température étant relié à un dispositif de régulation (10) pour la régulation d'une puissance calorifique du chauffage (8, 15, 16).

10. Dispositif selon l'une des revendications précédentes, où sont prévus au moins deux seconds capteurs de température (12) disposés successivement dans le sens du courant, ces capteurs de température étant reliés au dispositif de régulation.

11. Dispositif selon l'une des revendications précédentes, où le chauffage (8, 15, 16) comporte au moins un élément chauffant (8) entourant le corps poreux (2).

12. Dispositif selon l'une des revendications précédentes, où le chauffage (8, 15, 16) comporte une cartouche chauffante (16) s'engageant de manière centrale dans le corps poreux (2).

13. Dispositif selon l'une des revendications précédentes, où le chauffage (8, 15, 16) comporte au moins un élément chauffant autorégulateur, de préférence un élément CTP (15, 16).

14. Dispositif selon l'une des revendications précédentes, où le chauffage (8, 15, 16) comporte un accumulateur et/ou un dissipateur de chaleur (17).

15. Dispositif selon l'une des revendications précédentes, où l'accumulateur et/ou le dissipateur de chaleur (17) enveloppe un segment côté sortie (A2) du carter d'évaporateur (1) relié en aval du segment côté admission (A1).
